# EUROPEAN PATENT SPECIFICATION

(11) **EP 2 330 069 B1**
(45) Date of publication and mention of the grant of the patent: **05.09.2012**
(21) Application number: 10173003.4
(22) Date of filing: 17.08.2010
(51) Int. Cl.: B66C 23/26, B66C 23/62, B66C 23/72, F03D 9/00, F03D 11/04

(54) **Tower crane provided with wind generator**
Turmdrehkran ausgestattet mit einem Windgenerator
Grue à tour équipée d'un génerateur éolien

(30) Priority: 27.11.2009 IT TO20090928
(43) Date of publication of application: 08.06.2011
(73) Proprietor: Gru Dalbe S.R.L., 21015 Lonate Pozzolo VA (IT)
(72) Inventor: Dalla Benetta, Corrado, 21013 Varese (IT)
(74) Representative: Robba, Pierpaolo

(56) References cited:
- EP-A2- 2 065 331
- CN-A- 101 550 918
- JP-A- 2003 246 586
- JP-A- 2008 308 328
- US-A1- 2002 102 911

## Description

### Technical field

The present invention relates to a tower crane provided with wind generator.

More particularly, the invention relates to a tower crane of the top-slewing and top-counterweighted type provided with wind generator.

### Prior art

As known, top-counterweighted tower cranes generally comprise a ballasted base which rests on the ground and carries a tower or vertical column fixed thereto which supports in a substantially perpendicular arrangement a working jib and a counterweighted counter-jib, both slewing. The counter-jib, provided with counterweight, has the purpose of balancing the weight of the working jib and of the load carried by it when the crane is working. Said counterweight is usually made by several blocks of concrete.

GB665013 discloses an example of tower crane of the aforesaid type.

In more recent years the pressing need for reducing pollution in general and for saving energy has provoked the development of cranes provided with means for the production of energy which exploit natural sources like wind and solar radiation.

The considerable height reached by a tower crane permits in fact to improve the efficiency of these means of production of electric energy based on wind generators and solar panels, in particular photovoltaic panels, respectively.

From JP2003246586 it is known for example to equip a generic crane with a wind generator, a solar panel, a battery, an electric motor and a diesel engine. The battery is charged at night by the wind generator and by day by the solar panel. The electric motor of the crane is used for load hoisting and handling until the battery is not exhausted and when the battery is exhausted the diesel engine is powered. In this crane the wind generator is rotatably mounted on a vertical supporting post associated with the crane jib. The generator further comprises a wind vane which causes the rotation of the generator according to the variation of the wind blowing direction. The longitudinal axis of the crane jib and the axis of rotation of the wind generator, which lie on substantially parallel planes, can therefore assume any mutual angular position.

An improved method of controlling a tower crane provided with a wind generator, a solar panel and a battery, aimed at the reduction of the power of the diesel engine necessary to operate the crane is disclosed in EP 2 065 331. According to the teaching of this document, the battery is housed in the crane base where also the diesel engine, the electric motor and a generator for recharging the battery and driven by the diesel engine are housed.

A first problem encountered during the manufacture of a tower crane provided with wind generator is caused by the critical location of the generator.

Because of the crane jib slewing which, as known, varies according to the working position and wind direction when the crane is not used, the efficiency of the engine can be considerably reduced.

The solutions which provide for the generator to be rotatably associated with the crane whereby the axis of rotation of the generator is permanently oriented along the wind direction are complicated and moreover they require the generator to be equipped with a wind vane for causing the rotation thereof according to the wind direction. Moreover, the mechanism which permits the rotation of the generator and the wind vane itself have to be adequately dimensioned to resist the wind force which often has a high intensity. The breaking of the wind vane or the blocking of the mechanism for the rotation can for example cause a dangerous thrust force acting against the crane in strong wind conditions. In such conditions for safety reasons the crane jib is left idle so as to orient itself in a position which provides minimum resistance to the wind.

The presence of a unit such as the wind generator arranged upwind because of a failure of the mechanism of rotation might cause a dangerous thrust on the jib which instead would be correctly oriented. At worst, the jib would be correctly oriented with respect to the wind and the generator would be oriented so as to provide maximum resistance with the consequent risk of dangerous crane swinging because of the wind.

The known examples cited above do not address this problem and therefore do not provide a satisfying solution.

A first object of the invention is therefore to provide a tower crane which allows to solve the above problem.

Another problem encountered in the manufacture of tower cranes provided with means exploiting the wind or the sun radiation for producing electric energy, arises from the difficulty of finding a correct location for the batteries and the other electric and electronic devices controlling the system for energy production and storage, in particular because of their seize, weight and fragility and of the necessity to reduce wiring for safety reasons and for reducing losses.

US 2020/0102911 teaches for example to locate electric batteries at the end of the counter-jib of a tower crane, so as to exploit their weight as counterweight.

This arrangement, however, does not allow to solve the above problem completely, because of the complexity of the electric energy production system in the case of tower cranes provided with wind generator.

It is therefore a further object of the invention to provide a tower crane provided with wind generator, which permits to solve this further problem of the known art.

A last but not least object of the invention to provide a tower crane of the above type which can be simply and economically manufactured.

### Description of the invention

The above and other objects are achieved by the tower crane provided with wind generator as claimed in the attached claims.

Advantageously, thanks to the fact that the axis of rotation of the wind generator is substantially parallel to the longitudinal axis of the slewing jib, the natural orientation of the crane can be exploited to maintain constantly high the efficiency of electric energy production by the wind generator.

Advantageously, the arrangement of the wind generator cantilevered at the back of the counterweight located at the tail of the counter-jib contributes to facilitate assembling and to reduce to a minimum the wiring among the various units belonging to the system for producing and storing the electric energy, thus increasing the operating safety and loss reduction.

Moreover, advantageously according to the invention the counterweight is wholly or partially replaced by the battery or batteries pack and electric and electronic devices, such as for example a controller and an inverter, which are preferably located in the cage provided for said counterweight together with the batteries, thereby avoiding to increase the overall weight of the crane.

### Brief Description of the Figures

Some preferred embodiments of the invention will be described by way of non-limiting example with reference to the accompanying drawings, in which:
- Figure 1 shows a first example of a tower crane not forming part of the invention;
- Figure 2 shows a first embodiment of the tower crane according to the invention;
- Figure 3 shows an example of a tower crane not forming part of the invention;
- Figures 4, 5 and 6 show corresponding embodiments of the connecting circuit of the system for the production of electric energy.

### Description of Preferred Embodiments

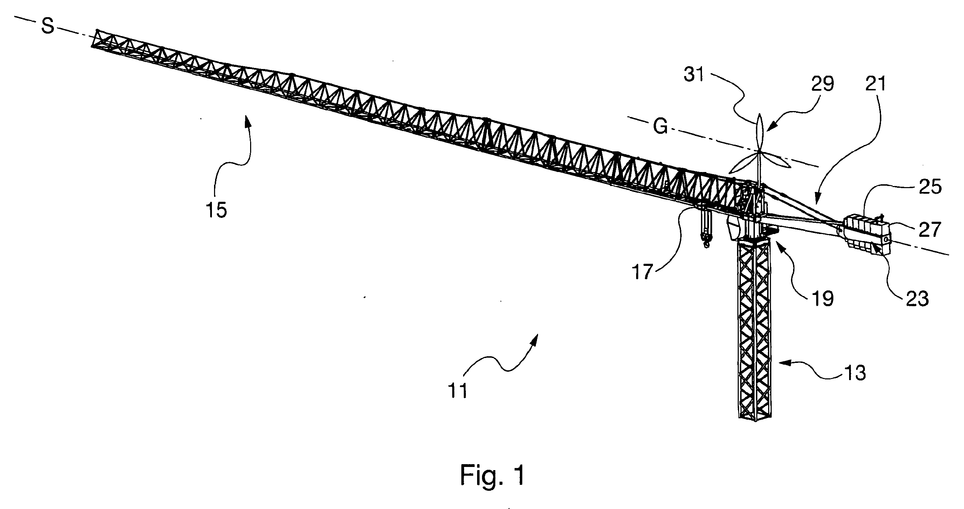

Referring to Figure 1 there is illustrated a first example of a tower crane which has been generally denoted by reference numeral 11.

Crane 11 comprises a tower 13 and a slewing jib comprising a working portion 15 and a counter-jib portion 21.

The working portion 15 and the counter-jib portion 21 are substantially aligned along the longitudinal axis "S" which is generally perpendicular to the vertical axis of tower 13.

According to the known art a sliding trolley 17 for load hoisting and handling is associated with the working portion 15. Moreover, jib 15,21 is slewing with respect to tower 13 thanks to a motorized rotating unit 19 mounted on the top of tower 13.

A cage 23 or a similar containment structure is associated with the counter-jib portion 21 to receive a counterweight 25 which counterbalances the weight of the loads handled by trolley 17.

According to the example, said counterweight 25 comprises at least a battery 27.

The electric current provided by said battery 27 can be advantageously used to feed loads associated with the functioning of crane 11, for example the rotating unit 19, when the latter comprises an electric motor, or to feed other apparatus even not directly associated with the functioning of the crane, for example an illuminating lamp.

Said battery 27 is preferably fed by a wind generator 29 provided with wind vanes 31.

Thanks to the crane height, the wind generator 29 allows to produce electric energy efficiently by exploiting the wind present in the sites where the crane is located.

It is known in fact that the higher the wind generator is located, the faster the wind is generally and therefore the higher the obtainable power is.

As known, a crane is subjected to two main wind conditions which are defined as "operating wind" and "non-operating wind" or "storm wind". The first condition corresponds to the wind when the crane is working, i.e. when the crane is operating. In operating conditions the wind strikes on the crane in points which vary according to the position of the crane with respect to the wind direction, i.e. sometimes laterally, sometimes from the front, sometimes from the back. The second condition corresponds, by contrast, to the wind striking on the crane in non-operating conditions, i.e. when the crane is not working. When in conditions of "non-operating wind" a crane according to the prior art is free to slew passively so as to orient itself according to the wind direction and to catch it "on the tail", i.e. on the back with respect to the counterweight provided at the free end of the counter-jib and to provide the minimum possible resistance. In the illustrated example the wind generator 29 is of the kind having a rotor with horizontal rotating axis "G" and is rigidly mounted on the working portion 15 of the slewing jib, substantially at the rotation unit 19. Moreover, according to this example, the wings 31 of the wind generator are arranged so that the rotor of the wind generator is oriented towards the wind when the slewing jib 15,21 is oriented in conditions of "non-operating wind", i.e. so that the axis of rotation "G" of the rotor is substantially parallel to the axis "S" of the slewing arm 15,21 and, consequently, substantially parallel to the wind direction when the crane rests and passively slews under the effect of the wind.

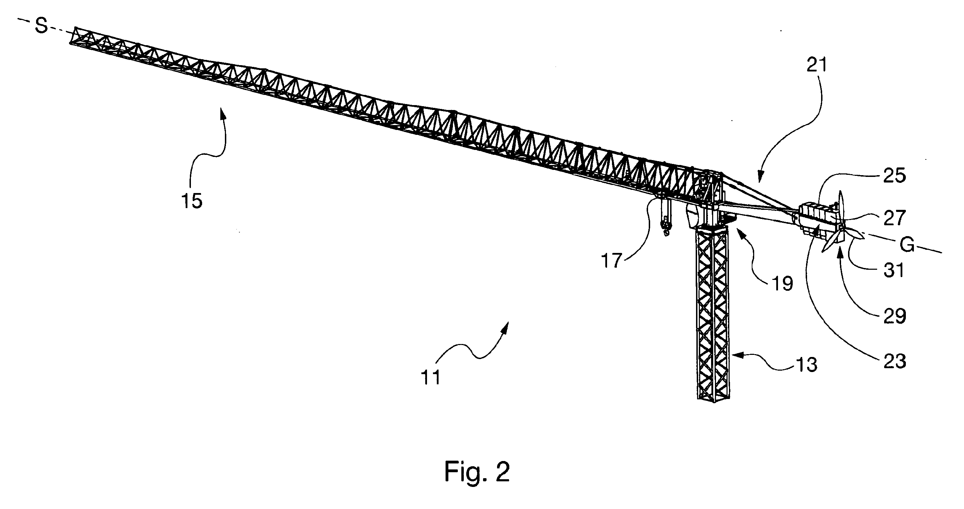

Referring to Figure 2, a first embodiment of the invention is illustrated, wherein the wind generator 29 is rigidly mounted at the tail of counter-jib 21 with the axis of rotation "G" of the rotor substantially coinciding with the longitudinal axis "S" of the jib 15,21.

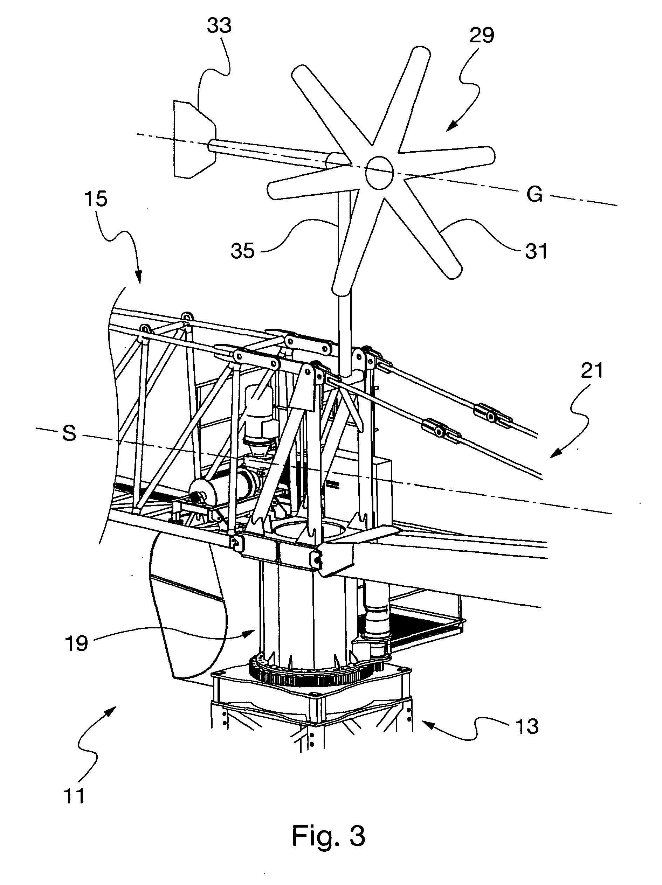

Referring to Figure 3, an example is illustrated, wherein the wind generator 29 is provided with a wind vane 33 and is rotatably mounted on a vertical supporting post 35 rigidly fixed to the crane jib and substantially parallel to the tower 13.

Alternately, wind generator 29 is rigidly fixed to supporting post 35 which in turn is rotatably associated to the crane jib 15,21. According to this arrangement the wind force which strikes on the wind vane 33 causes the rotation of the axis "G" of generator 29 so as to lie parallel to the wind direction. In this way wind generator vanes 31 are always arranged on a plane substantially perpendicular to the wind direction and optimal for exploiting the wind force for the production of electric energy. This arrangement attains the advantage of obtaining a constant production of electric energy, even if the crane is in working conditions, i.e. when the slewing of the crane is controlled by the crane operator for moving the loads.

A mechanism, for example a radial pin, for locking the rotation of the wind generator 29 with respect to the post 35 or of said post with respect to the crane jib 15,21 allows to rigidly block the rotation axis "G" of the wind generator 29 substantially parallel to the longitudinal axis "S" of the crane slewing jib, thereby obtaining the arrangement of the first example and particularly advantageous in conditions of "non-operating wind".

In the illustrated example the supporting post 35 is vertically mounted on the working portion 15 of the slewing jib 15,21 at the rotation unit 19. Still according to the invention, it is possible that the supporting post 35 is mounted in other positions along the jib 15,21, for example at the cage 23.

Referring to Figures from 4 to 6, corresponding embodiments of the connection circuit of the electric energy production system associated with the wind generator are illustrated.

Said system preferably comprises a controller 41 for transforming the alternate current of the alternator of the wind generator into direct current and to brake the generator in case of very strong winds or strikes of wind and an inverter 43 to transform the variable frequency voltage of the wind generator into alternated current suitable for the electric network.

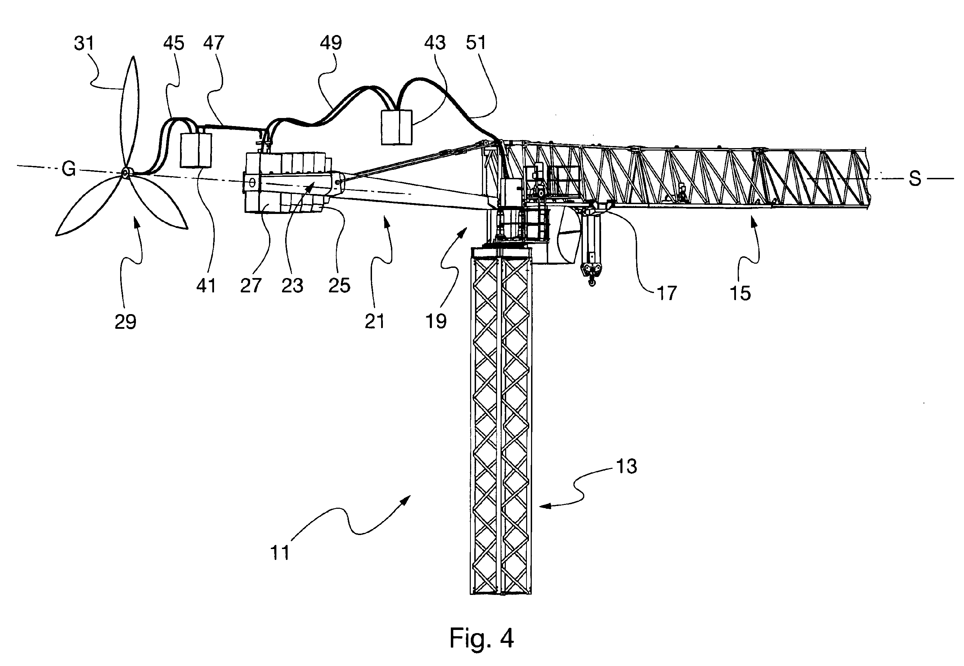

In particular, in Figure 4 a first embodiment of said circuit is illustrated, wherein the wind generator 29 is connected by means of cables 45 to a controller 41 to feed, by means of cables 47, batteries pack 27 housed in cage 23. Cables 49 connect batteries 27 to an inverter 43 which feeds, through cables 51, for example the various electric loads of the crane such as the motor of the rotation unit or the motor which moves trolley 17, or the motor for load hoisting.

Advantageously, according to the invention, the wind generator, the batteries pack 27, the controller 41, the inverter 43 and, consequently, the respective cables 45,47,49 are housed within the cage 23 and replace at least in part the weights, generally made of concrete, of the counterweight provided therein.

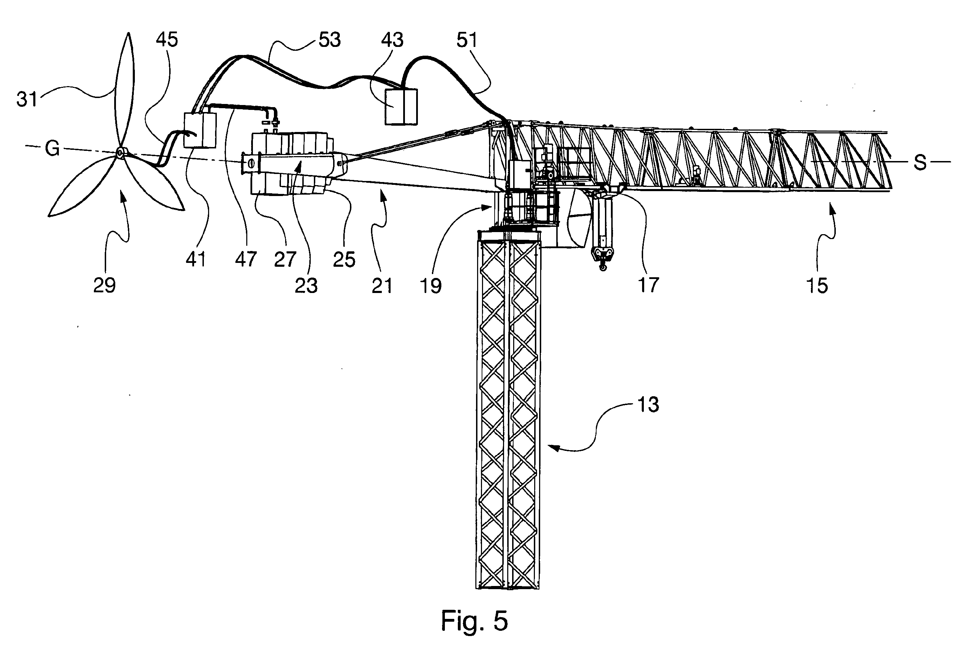

Referring to Figure 5, a second embodiment of the connecting circuit of the system for the production of electric energy associated with the wind generator 29 is illustrated, wherein controller 41 is directly connected to the inverter 43 by means of cables 53.

In this case too, advantageously, according to the invention, the wind generator, batteries pack 27, controller 41, inverter 43 and, consequently the respective cables 45,47,53 are housed within cage 23 and replace at least partially the weights, generally made of concrete, of the counterweight 25 provided therein.

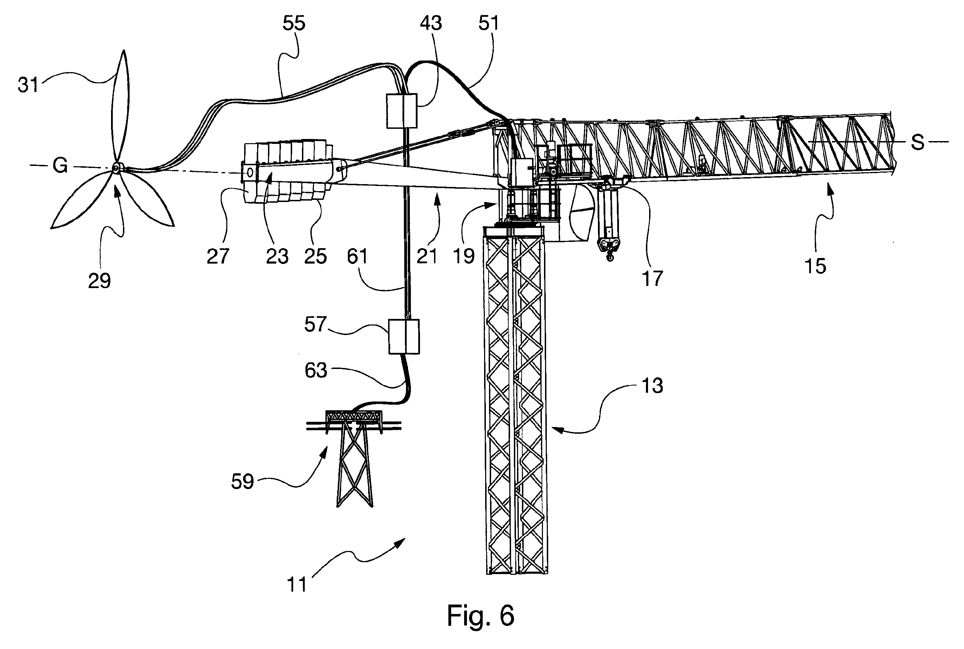

In Figure 6 a third embodiment of the connecting circuit of the system for the production of electric energy associated with the wind generator 29 is illustrated, wherein the wind generator 29 is directly connected to the inverter by means of cables 55 and the inverter 43 is connected by means of cables 61 to a unit 57 which performs bi-directional metering connected by means of cables 63 to the electric distribution network 59.

Advantageously, according to this embodiment, the electric network 59 is used when the production of electric energy by the wind generator 29 is not sufficient, to feed the loads associated with the crane, while it can receive and in case remunerate the electric energy produced by the wind generator 29 when this is produced in excess of the crane needs.

It is clear that the above description has been given by way of non-limiting example and that further changes and modifications are possible without departing from the scope of the invention, as defined by the following claims.

## Claims

1. Tower crane (11) provided with horizontal axis (G) wind generator (29), comprising a tower (13), a slewing jib which has a working portion (15) and to which a sliding trolley (17) is associated for load hoisting and handling, and a counter-jib portion (21), wherein the wind generator is rigidly associated or rigidly associatable to the crane jib so that the axis (G) of rotation of said wind generator (29) lies substantially parallel to the longitudinal axis (S) of the crane slewing
**characterized in that** said wind generator (29) is associated to the counter-jib portion (21) at a counterweight (25) for counterbalancing the weight of the loads handled by the trolley (17).

2. Tower crane according to claim 1, wherein the axis of rotation (G) of the wind generator (29) substantially coincides with the longitudinal axis (S) of the slewing jib (15, 21).

3. Tower crane according to claim 1, wherein said wind generator (29) is associated to the counter-jib (21) at the back of and cantilevering from the counterweight (25).

4. Tower crane according to any of the preceding claims, wherein the wind generator (29) is equipped with a wind vane (33) and is rotatably mounted on a vertical supporting post (35), said supporting post being rigidly fixed to the crane jib and substantially parallel to the tower (13) and wherein a mechanism is provided for locking the rotation of the wind generator (29) with respect to the post (35) which allows to rigidly block the rotation axis (G) of the wind generator (29) substantially parallel to the longitudinal axis (S) of crane slewing jib.
3

5. Tower crane according to any of the claims from 1 to 3, wherein the wind generator (29) is equipped with a wind vane (33) and is rigidly fixed to a vertical supporting post (35), said supporting post being rotatably associated to the crane jib (15,21) and substantially parallel to the tower (13) and wherein a mechanism is provided for locking the rotation of the post (35) with respect to the crane jib (15,21) which allows to rigidly block the rotation axis (G) of the wind generator (29) substantially parallel to the longitudinal axis (S) of the crane slewing jib.

6. Tower crane according to any of the preceding claims, wherein said counter-jib comprises a seat (23) for a counterweight and wherein said counterweight comprises at least a battery (27) and electric and electronic devices (41,43) of the system for producing electric energy associated to the wind generator (29).

## Patentansprüche

1. Turmkran (11), der mit einem Windgenerator (29) mit horizontaler Achse (G) ausgestattet ist, umfassend einen Turm (13), einen schwenkbaren Kranausleger, der einen Arbeitsabschnitt (15) aufweiset und an dem eine gleitende Krankatze (17) zum Heben und Bewegen von Lasten vorgesehen ist, und einem Gegenauslegerabschnitt (21), wobei der Windgenerator starr an dem Kranausleger befestigt oder befestigbar ist, sodass die Drehachse (G) des Windgenerators (29) im Wesentlichen parallel zu der Längsachse (S) des Kranauslegers liegt, **dadurch gekennzeichnet, dass** der Windgenerator (29) an dem Gegenauslegerabschnitt (21) als ein Gegengewicht (25) zum Ausgleichen des Gewichts von Lasten vorgesehen ist, die von der Krankatze (17) bewegt werden.

2. Turmkran nach Anspruch 1, wobei die Drehachse (G) des Windgenerators (29) im Wesentlichen mit der Längsachse (S) des Krankauslegers (15, 21) zusammenfällt.

3. Turmkran nach Anspruch 1, wobei der Windgenerator (29) an dem Gegenausleger (21) auf der Rückseite des Gegengewichts (25) befestigt ist und von diesem absteht.

4. Turmkran nach einem der vorstehenden Ansprüche, wobei der Windgenerator (29) mit einer Windfahne (33) ausgerüstet ist und drehbar an einem senkrechten Trägerpfosten (35) befestigt ist, wobei der Trägerpfosten starr an dem Kranausleger und im Wesentlichen parallel zu dem Turm (13) befestigt ist, und wobei ein Mechanismus zum Blockieren der Drehung des Windgenerators (29) relativ zu dem Pfosten (35) vorgesehen ist, der es ermöglicht, die Drehachse (G) des Windgenerators (29) im Wesentlichen parallel zu der Längsachse (S) des Kranauslegers starr festgelegt ist.

5. Turmkran nach einem der Ansprüche 1 bis 3, wobei der Windgenerator (29) mit einer Windfahne (33) ausgerüstet ist und starr an einem senkrechten Trägerpfosten (35) befestigt ist, wobei der Trägerpfosten drehbar an dem Kranausleger (15, 21) und im Wesentlichen parallel zu dem Turm (13) befestigt ist, und wobei ein Mechanismus zum Blockieren der Drehung des Pfostens (35) in Bezug auf den Kranausleger (15, 21) vorgesehen ist, der es ermöglicht, die Drehachse (G) des Windgenerators (29) im Wesentlichen parallel zu der Längsachse (S) des Kranauslegers starr festzulegen.

6. Turmkran nach einem der vorstehenden Ansprüche, wobei der Gegenausleger einen Sitz (23) für ein Gegengewicht aufweiset und wobei das Gegengewicht wenigstens eine Batterie (27) und elektrische und elektronische Vorrichtungen (41, 43) eines Systems zum Erzeugen elektrischer Energie aufweist, das dem Windgenerator (29) zugeordnet ist.

## Revendications

1. Grue tour (11) équipée d'un générateur éolien (29) à axe horizontal (G) comportant une tour (13), une flèche pivotante qui présente une partie fonctionnelle (15) et à laquelle un chariot coulissant (17) est associé pour lever une charge et la manipuler, et une partie de contre-flèche (21), dans laquelle le générateur éolien est associé de façon rigide ou peut être associé de façon rigide à la flèche de la grue de telle sorte que l'axe (G) de rotation dudit générateur éolien (29) se présente de façon essentiellement parallèle à l'axe longitudinal (S) d'orientation de la grue, **caractérisée en ce que** ledit générateur éolien (29) est associé à la partie de contre-flèche (21) au niveau d'un contrepoids (25) en vue d'équilibrer le poids des charges manipulées par le chariot (17).

2. Grue à tour selon la revendication 1, dans laquelle l'axe de rotation (G) du générateur éolien (29) coïncide essentiellement avec l'axe longitudinal (S) de la flèche pivotante (15, 21).

3. Grue à tour selon la revendication 1, dans laquelle ledit générateur éolien (29) est associé à la contre-flèche (21) au niveau du dos du contrepoids (25) et en porte à faux à partir de celui-ci.

4. Grue à tour selon l'une quelconque des revendications précédentes, dans laquelle le générateur éolien (29) est doté d'une ailette directrice (33) et est monté de façon à pouvoir tourner sur un montant vertical de support (35), ledit montant de support étant fixé de façon rigide à la flèche de la grue et étant essentiellement parallèle à la tour (13), et dans laquelle un mécanisme est prévu pour bloquer la rotation du générateur éolien (29) par rapport au montant (35) ce qui permet de bloquer de façon rigide l'axe de rotation (G) du générateur éolien (29) de façon essentiellement parallèle à l'axe longitudinal (S) de la flèche pivotante de la grue.

5. Grue à tour selon l'une quelconque des revendications 1 à 3, dans laquelle le générateur éolien (29) est équipé d'une ailette directrice (33) et est fixé de façon rigide à un montant de support vertical (35), ledit montant de support étant associé à rotation à la flèche de la grue (15, 21) et de façon essentiellement parallèle à la tour (13) et dans laquelle un mécanisme est prévu pour bloquer la rotation du montant (35) par rapport à la flèche de la grue (15, 21) ce qui permet de bloquer de façon rigide l'axe de rotation (G) du générateur éolien (29) de façon essentiellement parallèle à l'axe longitudinal (S) de la flèche pivotante de la grue.

6. Grue à tour selon l'une quelconque des revendications précédentes , dans laquelle ladite contre-flèche comporte une embase (23) destinée à un contrepoids et dans laquelle ledit contrepoids comprend au moins une batterie (27) et des dispositifs électriques et électroniques (41, 43) du système permettant de produire l'énergie électrique associée au générateur éolien (29).
